# DEMANDE DE BREVET EUROPEEN

(11) **EP 4 737 888 A1**
(43) Date de publication de la demande: **06.05.2026**
(21) Numéro de dépôt: 24210632.6
(22) Date de dépôt: 04.11.2024
(51) Int. Cl.: G01N 21/87, G01N 21/88

(54) **SYSTÈME DE CONTRÔLE DE CARACTÉRISTIQUES DE PIERRES PRÉCIEUSES**

(71) Demandeur: ETA SA Manufacture Horlogère Suisse, 2540 Grenchen (CH)
(72) Inventeur: DUBUGNON, Dominique, 1162 Saint-Prex (CH)
(74) Mandataire: ICB SA

(57) **Abrégé**

Un aspect de l'invention concerne un dispositif d'éclairage (2) pour une pierre précieuse (10) comprenant un projecteur (3) lumineux pourvu d'un module lumineux principal (14a) de génération d'un éclairement lumineux spécifiquement configuré pour faire ressortir des caractéristiques de la pierre précieuse (10), ledit module principal (14a) comprenant un circuit imprimé (25) incluant une pluralité de sources lumineuses (16) émettant chacune un faisceau lumineux et un élément de diffusion optique disposé en regard de cette pluralité de sources lumineuses (16), ledit module principal (14a) comportant un réflecteur (21) agencé entre ledit élément de support (7) et l'élément de diffusion optique, ledit réflecteur (21) comportant au moins une cavité susceptible de réfléchir au moins en partie des faisceaux lumineux vers l'élément de diffusion optique, chaque cavité étant formée d'un fond (17) et de parois périphériques(18a, 18b, 18c) s'étendant du fond (17) en direction de l'élément de diffusion optique (23) en ayant leur sommet respectif disposé relativement à l'élément de diffusion optique à une première distance (E1).

## Description

### Domaine technique de l'invention

L'invention concerne un système de contrôle de caractéristiques d'une pierre précieuse comprenant un dispositif d'éclairage spécifiquement adapté notamment pour permettre une identification visuelle de caractéristiques d'une telle pierre.

### Arrière-plan technologique

Dans l'état de la technique, les systèmes de contrôle de caractéristiques de pierres précieuses comme les diamants sont généralement mis en oeuvre dans le cadre de vérification de leur authenticité ou de réalisation de classement ou encore de tri de ces pierres précieuses. Pour ce faire ces systèmes utilisent couramment des dispositifs d'éclairage mettant en oeuvre des tubes fluorescents afin d'assurer un contrôle visuel de leurs caractéristiques interne ou externe.

Toutefois un des inconvénients majeurs de tels systèmes est de ne pas être suffisamment sécurisé car les tubes fluorescents mis en oeuvre dans ses dispositifs d'éclairage comprennent des substances comme le mercure qui sont nocives pour l'environnement et la santé humaine.

Dans ce contexte, on comprend donc qu'il existe un besoin de trouver une solution alternative qui serait inoffensive.

### Résumé de l'invention

Un but de l'invention est par conséquent de proposer une solution qui permet d'améliorer la précision de l'évaluation de caractéristiques de pierres précieuses grâce à un système de contrôle de ces caractéristiques qui est pourvu d'un dispositif d'éclairage configuré pour générer un éclairement de ces pierres qui est précis, dynamique et adaptatif.

Dans ce dessein, un des aspects de l'invention, concerne un dispositif d'éclairage pour une pierre précieuse comprenant un projecteur lumineux pourvu d'un module lumineux principal de génération d'un éclairement lumineux spécifiquement configuré pour faire ressortir des caractéristiques de la pierre précieuse, ledit module principal comprenant un circuit imprimé incluant une pluralité de sources lumineuses émettant chacune un faisceau lumineux et un élément de diffusion optique disposé en regard de cette pluralité de sources lumineuses, ledit module principal (14a) comportant un réflecteur agencé entre ledit élément de support et l'élément de diffusion optique, ledit réflecteur comportant au moins une cavité susceptible de réfléchir au moins en partie des faisceaux lumineux vers l'élément de diffusion optique, chaque cavité étant formée d'un fond et de parois périphériques s'étendant du fond en direction de l'élément de diffusion optique en ayant leur sommet respectif disposé relativement à l'élément de diffusion optique à une première distance.

Dans d'autres modes de réalisation :
- le réflecteur comporte deux cavités susceptibles de réfléchir au moins en partie des faisceaux lumineux vers l'élément de diffusion optique chaque cavité est formée du fond, des parois périphériques et d'une paroi mitoyenne séparant de l'autre cavité, lesdites parois s'étendant du fond en direction de l'élément de diffusion optique en ayant leur sommet respectif disposé relativement à l'élément de diffusion optique à la première distance pour les parois périphériques et une deuxième distance pour la paroi mitoyenne, la première distance étant inférieure à la deuxième distance ;
- les sources lumineuses comprennent des éléments électroluminescents ;
- les sources lumineuses ont des températures de couleur réglables qui évoluent entre 2500k et 7000 K de préférence entre 5700 K et 6300 K ;
- le dispositif comprend un module de réglage de fonctions mises en oeuvre par le dispositif, ce module comportant un organe de commande de ces fonctions et un écran diffusant des informations relatives à ces fonctions ;
- lesdites fonctions sont relatives au réglage de l'éclairement, et de la température des sources lumineuses ;
- le dispositif comprend un bras articulé comportant des première et deuxième parties reliées entre elles en l'une de leurs deux extrémités ;
- ces première et deuxième parties comprennent chacune au moins un moteur susceptible de piloter le déplacement horizontal et/ou vertical du projecteur relativement à ladite pierre précieuse ;
- le dispositif comprend des modules périphériques agencés dans des parties latérales dudit projecteur et configurés pour atténuer les perturbations lumineuses susceptibles de résulter de source lumineuse externe au dispositif ;

Un autre de ces aspects de l'invention, concerne un système de contrôle des caractéristiques d'une pierre précieuse comprenant un tel dispositif d'éclairage et un élément de support sur lequel est fixé ledit dispositif qui est configuré pour générer un éclairement d'une zone d'intérêt comprise sur un plateau dudit élément de support, ladite zone d'intérêt 8 comportant ladite pierre précieuse susceptible d'être manipulée par un utilisateur.

### Brève description des figures

Les buts, avantages et caractéristiques de l'invention ressortiront de la description détaillée de l'invention qui va suivre, donnée à titre d'exemple et faite en référence aux figures annexées suivantes :
- la figure 1 représente un système de contrôle des caractéristiques de pierres précieuses comprenant un dispositif d'éclairage adapté à de telles pierres et un plateau sur lequel un tel dispositif est fixé, selon un mode de réalisation de l'invention ;
- la figure 2 représente un spectre de lumière émise par le dispositif d'éclairage avec une température de couleur comprise entre 2500k et 7000 K, selon un mode de réalisation de l'invention ;
- la figure 3 représente une vue schématique de dessus d'un module lumineux principal de génération d'un éclairement lumineux compris dans un projecteur du dispositif d'éclairage comprenant une pluralité de source lumineuses, selon un mode de réalisation de l'invention, et
- la figure 4 représente une vue en coupe A-A du module principal de génération d'un éclairement lumineux illustré sur la figure 3.

### Description détaillée de l'invention

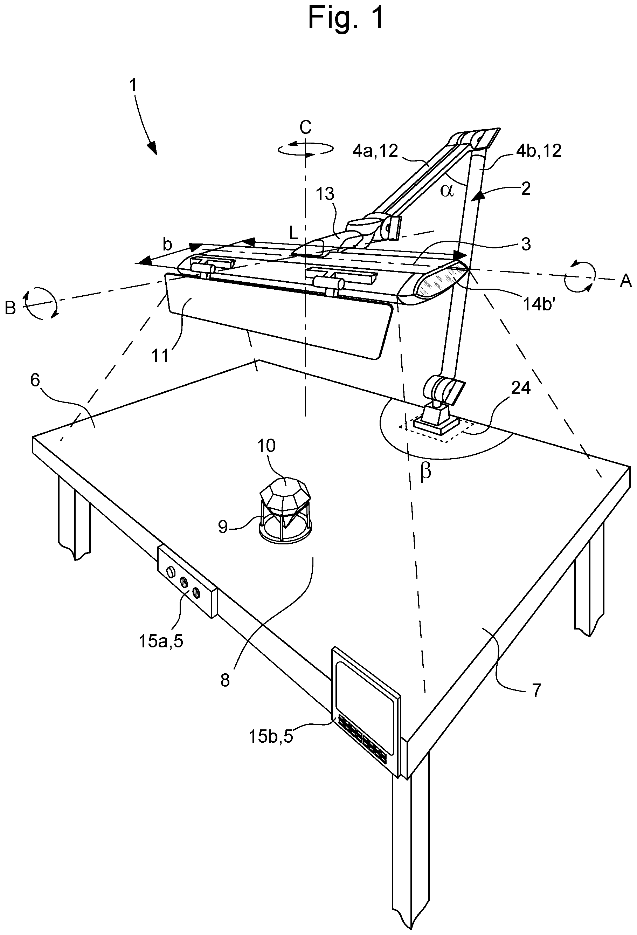

La figure 1 montre une représentation d'un système de contrôle 1 de caractéristiques d'une pierre précieuse 10 comprenant un dispositif d'éclairage 2 spécifiquement adapté pour mettre en évidence ou discriminer une ou plusieurs caractéristiques de pierres précieuses 10. Un tel système 1 peut être compris dans un environnement de travail d'un utilisateur. Cet environnement de travail est de préférence défini dans une pièce d'un bâtiment. Autrement dit, dans cette pièce les seules sources lumineuses sont comprises dans le présent système 1 ou encore il peut y avoir dans cette pièce une source lumineuse comme la lumière du jour qui est plus ou moins diffuse.

On note que ces pierres précieuses 10 comprennent de manière non limitative et non exhaustive les gemmes que sont le diamant, le saphir, le rubis et l'émeraude. En complément, les caractéristiques de telles pierres précieuses 10 encore appelées propriétés, peuvent comprendre: leur couleur, leur pureté, leur taille.

Ce système 1 comprend un élément de support 7 tel qu'un bureau ou encore un établi, formé d'un plateau 6, notamment rectangulaire. Un tel plateau 6 comprend sur tout ou partie de sa surface une zone d'intérêt 8 susceptible de recevoir un éclairement provenant du dispositif d'éclairage 2. Cette zone d'intérêt 8 comprend un support 9 sur lequel la pierre précieuse 10 dont des caractéristiques doivent être observées, est susceptible d'être agencée.

Ce plateau 6 comprend une zone de fixation du dispositif d'éclairage 2 à l'élément de support 7.

Un tel système 1 participe à ce que l'utilisateur encore appelé observateur réalise à l'œil nu un contrôle des caractéristiques de la pierre précieuse 10 comprise dans la zone d'intérêt 8, un tel contrôle pouvant prévoir notamment une évaluation de ces caractéristiques. Autrement dit, cet utilisateur effectue un tel contrôle à partir de la perception visuelle qu'il a de ces caractéristiques de la pierre précieuse 10. Cette perception visuelle peut être définie comme étant le résultat de l'interprétation que fait le cerveau de cet utilisateur d'une information relative à ces caractéristiques qui est comprise dans un rayonnement lumineux capté par photoréception et entrant à travers ses pupilles de sorte à activer ses cellules réceptives qui se trouvent dans les rétines de ses yeux. Les signaux produits par ces cellules étant par la suite transmis par le nerf optique jusqu'au cerveau.

Dans cette zone d'intérêt 8, la pierre précieuse 10 peut faire l'objet de manipulation par l'utilisateur. Dans ce système 1, une telle zone d'intérêt 8 peut être :
- un espace défini sur le plateau 6 de l'élément de support 7 lorsque la pierre précieuse 10 est agencée ou déposé sur le support et occupe alors une portion de la surface de ce plateau 6, ou
- un volume défini au-dessus de ce plateau 6 et dans lequel est compris cette pierre précieuse 10 lorsque qu'elle est manipulée par l'utilisateur.

Une telle zone d'intérêt 8 est susceptible de bénéficier d'un éclairement particulier réalisé en fonction du profil de vision de l'utilisateur et/ou d'au moins une caractéristique de la pierre.

Dans ce système 1, le dispositif d'éclairage 2 comprend :
- un projecteur 3 de lumière ;
- un bras articulé 12 comprenant des première et deuxième parties 4a, 4b reliées entre elles en l'une de leurs deux extrémités ;
- au moins un moteur électrique agencé dans le bras 12 ;
- un module de réglage 5 de fonctions mises en oeuvre par ce dispositif, ce module comportant un organe de commande 15a de ces fonctions et un écran 15b diffusant des informations relatives à ces fonctions.

Dans ce dispositif, le bras 12 est apte à relier/fixer/monter ce projecteur 3 à l'élément de support 7 du système 1 au niveau d'une zone de montage/fixation 24 définie dans le plateau 6.

Ce projecteur 3 comprend des sections axiale ou transversale présentant chacune la forme d'un polygone. Un tel projecteur 3 comporte des parties avant et arrière ainsi que deux parties latérales.

Un tel projecteur 3 comprend une enveloppe de protection, un module lumineux principal 14a, au moins un module lumineux secondaire 14b, un élément de liaison 13 de ce projecteur 3 au bras 12 du dispositif 2 et un élément de protection 11 de la lumière émise par ce projecteur 3. Cet élément de protection 11 permet de protéger les yeux de l'utilisateur du flux lumineux susceptible de provenir du module lumineux principal 14a.

Dans cette configuration, l'élément de protection 11 est fixé à la partie avant du projecteur 3 et l'élément de liaison 13 est quant à lui fixé à la partie arrière de ce projecteur 3.

Un tel élément de liaison est configuré rendre le projecteur 3 orientable autour d'au moins trois axes A, B, C relativement à la zone d'intérêt 8 et en particulier relativement à la pierre précieuse 10 dans cette zone d'intérêt 8. Ce projecteur 3 peut également être déplacé selon une direction verticale et/ou une direction horizontale relativement à la zone d'intérêt 8 et en particulier relativement à la pierre précieuse 10 dans cette zone d'intérêt 8. Par exemple en faisant varier l'angle α formé entre les première et deuxième parties 4a, 4b de ce bras 12 pour un déplacement vertical et un angle β formé au niveau de la zone de montage 24 du bras 12 au plateau 6 pour un déplacement horizontal.

Cette enveloppe de protection comporte une enceinte dans laquelle sont agencés le module lumineux principal 14a et ledit au moins un module lumineux secondaire 14b.

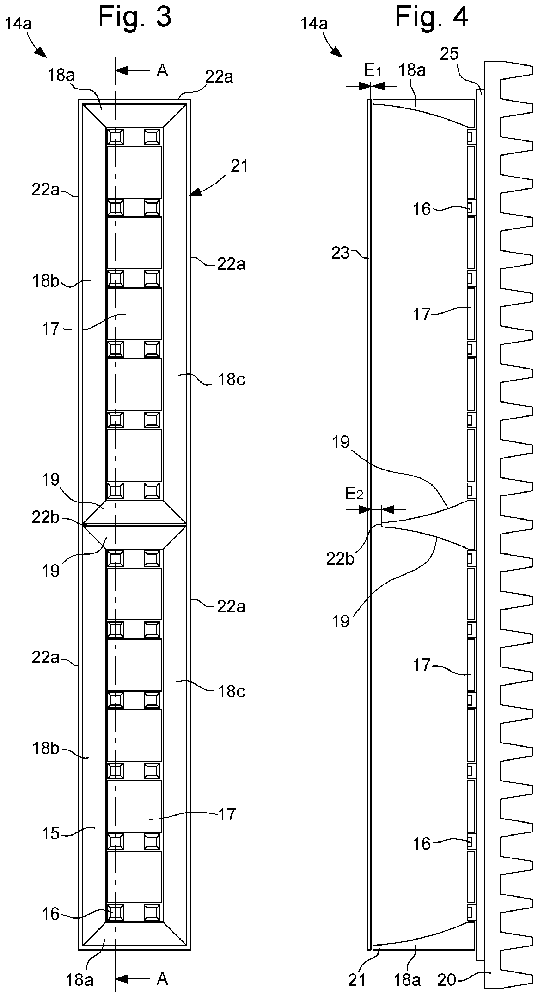

Le module lumineux principal 14a illustré sur les figures 3 et 4, est apte générer un éclairement lumineux spécifiquement configuré pour faire ressortir les caractéristiques de la pierre précieuse 10. On rappelle que cet éclairement lumineux correspond à un flux lumineux émis par le module principal 14a qui est reçu par unité de surface par la zone d'intérêt 8 et en particulier par la pierre précieuse 10. Cet éclairement est fonction de l'intensité lumineuse et de l'éloignement du module principal 14a relativement à la zone d'intérêt 8 et donc relativement à la pierre précieuse 10.

Ce module lumineux principal 14a comprend :
- une pluralité de sources lumineuses 16 conçues pour générer chacune un faisceau lumineux ;
- un élément de diffusion optique disposé en regard de cette pluralité de sources lumineuses 16, et
- un réflecteur 21 comportant une ou plusieurs cavités susceptibles de réfléchir un les faisceaux lumineux vers l'élément de diffusion optique comprenant un fond 17 et des parois périphériques 18a, 18b, 18c et mitoyenne 19.

Plus précisément, module lumineux principal 14a comprend un circuit imprimé 25 sur lequel sont disposées les sources lumineuses 16. Ce module comprend également un dissipateur thermique 20 en contact avec le circuit imprimé 25. Ce dissipateur thermique permet notamment d'évacuer la chaleur produite par les sources lumineuses 16.

Dans ce contexte, le circuit imprimé 25 permet de fournir un courant électrique aux sources lumineuses 16. Les sources lumineuses 16 sont ici des éléments électroluminescents tels que des diodes électroluminescentes. Ces sources de lumière ont des températures de couleur réglables qui évoluent entre 2500k et 7000 K, de préférence entre 5700 K et 6300 K, de préférence de 6000k.

Ces sources lumineuses 16 sont ici disposées sur le circuit imprimé 25 selon des lignes et des colonnes de manière à former des groupes. Dans l'exemple des figures 3 et 4, vingt-quatre sources lumineuses 16 sont ainsi disposées sur deux lignes et douze colonnes de manière à former deux groupes de douze sources lumineuses 16.

Dans cette configuration, les sources lumineuses 16 d'un même groupe sont généralement plus proches les unes des autres que d'une source lumineuse d'un autre groupe. Comme expliqué par la suite, les sources lumineuses 16 d'un même groupe sont ici caractérisées par le fait d'être associées à une même cavité.

Dans ce module principal 14a, l'élément de diffusion optique 23 s'étend en face des sources lumineuses 16 de manière à être éclairé par ces dernières. Cet élément de diffusion a la forme d'une plaque qui s'étend ici sensiblement parallèlement au circuit imprimé 25. Il comprend deux faces opposées : une face arrière orientée vers les sources lumineuses 16 et une face avant orientée vers la zone d'intérêt 8. Il présente une épaisseur qui est par exemple comprise entre 2 mm et 8 mm.

Cet élément de diffusion optique 23 est ainsi agencé de telle sorte que sa face arrière reçoive, ici directement, au moins une partie des faisceaux lumineux émis par les sources lumineuses 16. On entend ici par « *directement* » que les faisceaux lumineux ne traversent aucun autre élément optique avant d'atteindre la face arrière de cet élément de diffusion. On considère aussi que les faisceaux lumineux réfléchis par le réflecteur 21 parviennent « *directement* » à cet élément de diffusion.

En diffusant à travers cet élément de diffusion, les faisceaux lumineux génèrent au niveau de sa face avant un faisceau lumineux secondaire étendu, ce qui permet d'éclairer la zone d'intérêt 8. Cet élément de diffusion présente des angles de diffusion, pour un faisceau collimaté arrivant perpendiculairement à cet élément de diffusion, qui sont par exemple compris entre 20 degrés et 140 degrés.

Dans ce module principal 14a, le réflecteur 21 est interposé entre le circuit imprimé 25 et l'élément de diffusion, et donc entre la pluralité de sources lumineuses 16 et cet élément de diffusion.

Le réflecteur 21 comprend des parois ici des parois périphériques 18a, 18b, 18c et une paroi mitoyenne 19 séparant les deux cavités. Ces parois délimitent des cavités autour des sources lumineuses 16. Comme le montre bien les figures 3 et 4, chaque cavité est formée autour d'un unique groupe de sources lumineuses 16.

Plus spécifiquement, chaque cavité est formée autour de la pluralité de sources lumineuses 16 afin d'augmenter l'homogénéité du faisceau lumineux secondaire, tout en gardant des cavités de taille suffisante pour exploiter efficacement leur effet réflecteur 21. Dans ce présent mode de réalisation, cette pluralité est composée de douze sources lumineuses 16.

Pour guider les faisceaux lumineux vers l'élément de diffusion, les cavités sont évasées dans le sens où elles s'élargissent depuis les sources lumineuses 16 en direction de cet élément de diffusion. Pour guider les faisceaux lumineux vers cet élément de diffusion, les parois délimitant les cavités sont réfléchissantes. Le réflecteur 21 est ici réalisé dans un matériau plastique sur lequel est déposé une couche mince métallique, par exemple en aluminium, en argent ou encore un revêtement comprenant une peinture. En variante, le réflecteur 21 peut être intégralement réalisé en matériau métallique. Un matériau métallique sur lequel peut être déposé un revêtement tel que de la peinture ou une métallisation selon des méthodes chimiques ou physiques de dépôt utilisant de manière non limitative et non exhaustive les technologies de dépôt suivantes :
- dépôt chimique de couche en phase vapeur (plus connue sous l'acronyme CVD pour « chemical vapor déposition ») ;
- dépôt de couche atomique (plus connue sous l'acronyme ALD pour « atomic layer déposition »), mettant en oeuvre par exemple les procédés Plasma-ALD (acronyme P-ALD) ou encore Thermal-ALD (acronyme T-ALD) ;
- dépôt de couche moléculaire (plus connue sous l'acronyme MLD pour « molecular layer déposition ») ;
- dépôt de couche par pulvérisation cathodique (plus connue sous la dénomination en langue anglaise « sputtering method ») ;
- une combinaison d'au moins deux de ces types de technologie de dépôt de couche.

Les parois s'élèvent entre le circuit imprimé 25 et l'élément de diffusion, et donc entre la pluralité de sources lumineuses 16 et cet élément de diffusion. Toutefois, ces parois ne sont en contact direct ni avec le circuit imprimé 25 ni avec les sources lumineuses 16 pour éviter tout court-circuit. On entend donc par le fait qu'une cavité est formée « *autour* » d'un groupe de sources lumineuses 16 qu'elle est ajustée à proximité de ce dernier tout en surplombant légèrement le circuit imprimé 25, par exemple d'une distance comprise entre 0.5 mm et 3 mm.

Dans cette configuration, l'extrémité supérieure d'une source lumineuse, à l'opposé du circuit imprimé 25, peut tout de même être située dans la cavité associée. Ainsi, les cavités présentent ici des ouvertures d'entrée au niveau desquelles sont situées les sources lumineuses 16.

Les parois périphériques 18a, 18b, 18c entourent la pluralité de sources lumineuses 16 dans le sens où, mises bout-à-bout, les parois périphériques 18a, 18b, 18c entourent la totalité des sources lumineuses 16 du module principal 14a. En d'autres termes, les parois périphériques 18a, 18b, 18c ne s'étendent pas entre deux sources lumineuses 16. Dans les exemples illustrés sur les figures, les parois périphériques 18a, 18b, 18c surplombent un pourtour rectangulaire du circuit imprimé 25. Les parois périphériques 18a, 18b, 18c entourent, ici encadrent, donc toutes les sources lumineuses 16.

D'un autre côté, la paroi mitoyenne 19 s'étend entre les sources lumineuses 16. Cette paroi mitoyenne 19 s'étend plus particulièrement entre au les deux groupes adjacents de sources lumineuses 16, c'est-à-dire situés côte-à-côte. En d'autres termes, la paroi mitoyenne 19 sépare les deux cavités adjacentes. Ici, la paroi mitoyenne 19 s'étend d'une paroi périphérique 18a, 18b, 18c à une autre paroi périphérique 18a, 18b, 18c.

On observe bien sur les figures 3 et 4, que la paroi mitoyenne s'élève ainsi au milieu ou à l'intérieur du réflecteur 21, par opposition aux parois périphériques 18a, 18b, 18c qui s'élèvent en périphérie du réflecteur 21.

Les parois s'étendant du fond 17 de la cavité en direction de l'élément de diffusion optique 23 en ayant leur sommet 22a, 22b, respectif disposé relativement à l'élément de diffusion optique 23 à une première distance E1 pour les parois périphériques 18a, 18b, 18c et une deuxième distance E2 pour la paroi mitoyenne, la première distance E1 étant inférieure à la deuxième distance E2. Dans cette configuration, la hauteur des parois périphériques 18a, 18b, 18c limite en effet la quantité de lumière pouvant s'échapper avant d'arriver sur l'élément de diffusion.

On notera que dans une mode de réalisation, où la première distance E1 est nulle, la face arrière de l'élément de diffusion est alors en contact avec les parois périphériques 18a, 18b, 18c. Les faisceaux lumineux sont alors efficacement confinés à l'intérieur du réflecteur 21, entre le circuit imprimé 25 et l'élément de diffusion.

Ainsi, de façon générale, la structure du réflecteur 21 permet d'augmenter la compacité du module principal 14a tout en produisant un faisceau lumineux secondaire homogène pour éclairer la zone d'intérêt 8. Elle rend aussi le module principal 14a efficace sur le plan énergétique puisqu'elle augmente la quantité de lumière atteignant l'élément de diffusion optique 23.

De façon remarquable, la structure du réflecteur 21, combinée à l'agencement en groupe des sources lumineuses 16, permet d'utiliser un nombre de sources lumineuses 16 réduit. En effet, le module principal 14a est ici conçu de telle sorte que chaque source lumineuse génère un faisceau lumineux éclairant une portion de l'élément de diffusion.

Ainsi que nous l'avons évoqué, le dispositif 2 comprend aussi le module de réglage 5 de fonctions. Dans ce contexte, de telles fonctions sont relatives au réglage de l'éclairement et de la température des sources lumineuses 16 du projecteur 3.

Pour régler la fonction de l'éclairement, le module contrôle par l'intermédiaire de l'unité de traitement et de chaque moteur électrique, le déplacement du projecteur 3 selon une direction verticale et/ou horizontale ou encore pilote l'orientation de ce projecteur 3. Ce module peut aussi contrôler l'intensité lumineuse du module principal 14a.

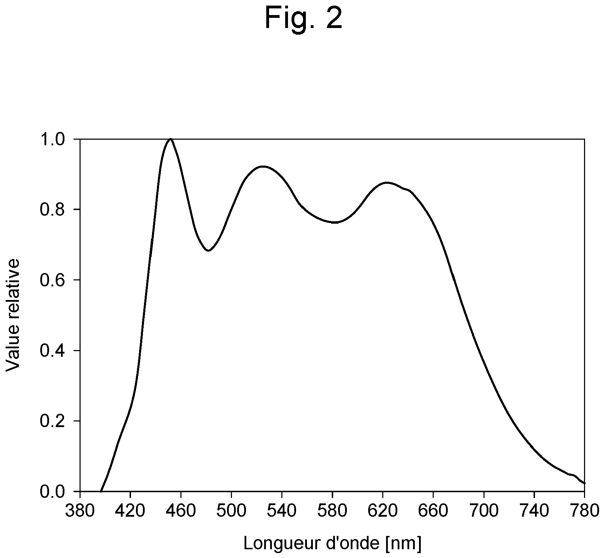

En référence, à la figure 2, un tel dispositif d'éclairage 2 permet de diffuser un éclairement de la zone d'intérêt 8 qui est homogène et ce sur un spectre de lumière compris dans un intervalle de longueurs d'ondes compris entre 390nm et 780.

En outre, dans ce dispositif 2, les modules lumineux secondaires 14b sont de préférence agencés dans chaque partie latérale du projecteur 3. Ils sont configurés pour atténuer les perturbations lumineuses susceptibles de résulter de source lumineuse comprise dans l'environnement de travail dès lors que l'intensité lumineuse présente dans cet environnement dépasse un seuil prédéfini.

Avantageusement, on notera qu'un tel dispositif d'éclairage 2, présentent des performances bien supérieures aux cabines de lumière utilisées pour le contrôle du rendu de couleurs de pierres précieuses.

## Revendications

1. Dispositif d'éclairage (2) pour une pierre précieuse (10) comprenant un projecteur (3) lumineux pourvu d'un module lumineux principal (14a) de génération d'un éclairement lumineux spécifiquement configuré pour faire ressortir des caractéristiques de la pierre précieuse (10), ledit module principal (14a) comprenant un circuit imprimé (25) incluant une pluralité de sources lumineuses (16) émettant chacune un faisceau lumineux et un élément de diffusion optique disposé en regard de cette pluralité de sources lumineuses (16), ledit module principal (14a) comportant un réflecteur (21) agencé entre ledit élément de support (7) et l'élément de diffusion optique, ledit réflecteur (21) comportant au moins une cavité susceptible de réfléchir au moins en partie des faisceaux lumineux vers l'élément de diffusion optique, chaque cavité étant formée d'un fond (17) et de parois périphériques(18a, 18b, 18c) s'étendant du fond (17) en direction de l'élément de diffusion optique (23) en ayant leur sommet (22a) respectif disposé relativement à l'élément de diffusion optique à une première distance (E1).

2. Dispositif (2) selon la revendication précédente, dans lequel ledit réflecteur (21) comporte deux cavités susceptibles de réfléchir au moins en partie des faisceaux lumineux vers l'élément de diffusion optique chaque cavité est formée du fond (17), des parois périphériques (18a, 18b, 18c) et d'une paroi mitoyenne (19) séparant de l'autre cavité, lesdites parois s'étendant du fond (17) en direction de l'élément de diffusion optique (23) en ayant leur sommet (22a, 22b) respectif disposé relativement à l'élément de diffusion optique à la première distance (E1) pour les parois périphériques (18a, 18b, 18c) et une deuxième distance (E2) pour la paroi mitoyenne (19), la première distance (E1) étant inférieure à la deuxième distance (E2).

3. Dispositif (2) l'une quelconque des revendications précédentes, dans lequel les sources lumineuses (16) comprennent des éléments électroluminescents.

4. Dispositif (2) selon l'une quelconque des revendications précédentes, dans lequel les sources lumineuses (16) ont des températures de couleur réglables qui évoluent entre 2500k et 7000 K de préférence entre 5700 K et 6300 K.

5. Dispositif (2) selon l'une quelconque des revendications précédentes, comprenant un module de réglage (5) de fonctions mises en oeuvre par le dispositif (2), ce module (5) comportant un organe de commande (15a) de ces fonctions et un écran (15b) diffusant des informations relatives à ces fonctions.

6. Dispositif (2) selon la revendication précédente, dans lequel lesdites fonctions sont relatives au réglage de l'éclairement et de la température des sources lumineuses (16).

7. Dispositif (2) selon l'une quelconque des revendications précédentes, comprenant un bras 12 articulé comportant des première et deuxième parties (4a, 4b) reliées entre elles en l'une de leurs deux extrémités.

8. Dispositif (2) selon la revendication précédente, dans lequel ces première et deuxième parties (4a, 4b) comprennent chacune au moins un moteur susceptible de piloter le déplacement horizontal et/ou vertical du projecteur (3) relativement à ladite pierre précieuse (10).

9. Dispositif (2) selon l'une quelconque des revendications précédentes, comprenant des modules secondaires (14b) agencés dans des parties latérales dudit projecteur (3) et configurés pour atténuer les perturbations lumineuses susceptibles de résulter d'une source lumineuse externe au dispositif (2).

10. Système (1) de contrôle des caractéristiques d'une pierre précieuse (10) comprenant un dispositif d'éclairage (2) selon l'une quelconque des revendications précédentes et un élément de support (7) sur lequel est fixé ledit dispositif (2) qui est configuré pour générer un éclairement d'une zone d'intérêt (8) comprise sur un plateau (6) dudit élément de support (7), ladite zone d'intérêt (8) comportant ladite pierre précieuse (10) susceptible d'être manipulée par un utilisateur.
